# EUROPEAN PATENT APPLICATION

(11) **EP 4 467 470 A1**
(43) Date of publication of application: **27.11.2024**
(21) Application number: 24176815.9
(22) Date of filing: 20.05.2024
(51) Int. Cl.: B65B 9/12, B65B 9/20, B65B 9/22, B65B 31/02, B65B 31/04, B65B 55/10, F16K 5/04

(54) **A PACKAGING MACHINE FOR FORMING PACKAGES FILLED WITH A POURABLE PRODUCT AND PACKAGING LINE HAVING A PACKAGING MACHINE**

(30) Priority: 26.05.2023 IT 202300010731
(71) Applicant: Tetra Laval Holdings & Finance S.A., 1009 Pully (CH)
(72) Inventor: SANIBONDI, Paolo, 41123 Modena (IT); FUGA MARTIN, David Arturo, 41123 Modena (IT)
(74) Representative: Tetra Pak - Patent Attorneys SE

(57) **Abstract**

There is descried a packaging machine (1) comprising a conveying device (5) configured to advance a web (4) of packaging material along a web advancement path (P), an isolation chamber (7) separating an inner environment (8) from an outer environment (9), a tube forming and sealing device (10) configured to form and longitudinally seal a tube (3) from the, in use, advancing web (4) of packaging material, a pressurizing device (30) configured to direct, in use, a flow of gas into the tube (3) and a control valve (32) configured to selectively control a fluidic connection between the inner environment (7) and the pressurizing device (30). The control valve (32) comprises an inlet opening (38) configured to receive a fluid, a first aperture (39) being and/or being controllable in fluidic connection with the inner environment (7), a second aperture (40) being controllable in fluidic connection with the pressurizing device (32); and a shutter (41) moveable between an open position and a closed position in which the shutter (41) is configured to selectively open and close the first aperture, respectively.

## Description

### TECHNICAL FIELD

The present invention relates to a packaging machine for forming packages of a pourable product, preferentially a pourable food product.

The present invention also relates to a packaging line having a packaging machine for forming package filled with a pourable product, preferentially a pourable food product.

### BACKGROUND ART

As is known, many liquid or pourable food products, such as fruit juice, UHT (ultra-high-temperature treated) milk, wine, tomato sauce, etc., are sold in packages made of sterilized packaging material.

A typical example is the parallelepiped-shaped package for liquid or pourable food products known as Tetra Brik Aseptic (registered trademark), which is made by sealing and folding laminated strip packaging material. The packaging material has a multilayer structure comprising a base layer, e.g. of paper, covered on both sides with layers of heat-seal plastic material, e.g. polyethylene. In the case of aseptic packages for long-storage products, such as UHT milk, the packaging material also comprises a layer of oxygen-barrier material (an oxygen-barrier layer), e.g. an aluminum foil, which is superimposed on a layer of heat-seal plastic material, and is in turn covered with another layer of heat-seal plastic material forming the inner face of the package eventually contacting the food product.

Packages of this sort are normally produced on fully automatic packaging machines, which advance a web of packaging material through a sterilization apparatus for sterilizing the web of packaging material at a sterilization station and to an isolation chamber (a closed and sterile environment) in which the sterilized web of packaging material is maintained and advanced. During advancement of the web of packaging material through the isolation chamber, the web of packaging material is folded and sealed longitudinally at a tube forming station to form a tube having a longitudinal seam portion, the tube being further fed along a vertical advancing direction.

For completing the forming operations, the tube is filled with a pourable product, in particular a pourable food product, and is transversally sealed and subsequently cut along equally spaced transversal cross sections within a package forming apparatus of the packaging machine during advancement along the vertical advancing direction.

Pillow packages are so obtained, each pillow package having a longitudinal sealing band, a top transversal sealing band and a bottom transversal sealing band.

A typical packaging machine comprises a conveying device for advancing the web of packaging material along a web advancement path and the tube formed from the web of packaging material along a tube advancement path, the sterilization apparatus for sterilizing the web of packaging material prior to its formation into the tube, a tube forming and sealing device at least partially arranged within the isolation chamber and being configured to form the tube from the advancing web of packaging material and to longitudinally seal the tube, a filling device for filling the tube with the pourable product and the package forming apparatus adapted to form, transversally seal and cut individual packages from the tube of packaging material.

Examples of a packaging machine are disclosed in patent documents EP2695816A1, EP3456638B1 and EP3575227A1 in the name of the Applicant.

In particular, the packaging machine of EP3456638B1 comprises a pressurizing device configured to direct, in use, a flow of sterile gas into the tube for obtaining a gas pressure within the tube providing a correct forming pressure. In such a way, the required hydrostatic pressure provided by the product column is reduced.

Even though the known packaging machine work satisfyingly a need is felt in the sector to further improve the known packaging machines.

### DISCLOSURE OF INVENTION

It is therefore an aim of the present invention to provide an improved packaging machine for the formation of packages filled with a pourable product, preferentially a pourable food product.

Advantageously, it is a further aim of the present invention to provide an improved packaging line having a packaging machine for the formation of packages filled with a pourable product, preferentially a pourable food product.

According to the present invention, there is provided a packaging machine as claimed in claim 1.

Preferred non-limiting embodiments of the packaging machine are claimed in the claims being directly and indirectly dependent on claim 1.

### BRIEF DESCRIPTION OF THE DRAWINGS

A non-limiting embodiment of the present invention will be described by way of example with reference to the accompanying drawings, in which:
Figure 1 is a schematic view of a packaging machine according to the present invention, with parts removed for clarity;
Figure 2 is a schematic view of a detail of the packaging machine of Figure 1, with parts removed for clarity;
Figure 3 is an enlarged perspective view of a control valve of the packaging machine of Figure 1, with parts removed for clarity;
Figures 4 and 5 are respective section views of the control valve (of Figure 3 with a shutter being, respectively, in a closed position and an open position, with parts removed for clarity; and
Figure 6 is an enlarged view of a section of Figure 5, with parts removed for clarity.

### BEST MODES FOR CARRYING OUT THE INVENTION

Number 1 indicates as a whole a packaging machine for producing packages 2, preferentially sealed packages 2, of a pourable food product, in particular a pourable food product, such as milk, milk drinks, yoghurt, yoghurt drinks, fruit juice, wine, tomato sauce, emulsions, beverages containing pulp, salt, sugar, etc.

Packaging machine 1 may be configured to form packages 2 from a tube 3 folded from a web 4 of packaging material. Preferentially, in use, tube 3 extends along a longitudinal axis, more preferentially having a vertical orientation.

Web 4 of packaging material may have a multilayer structure, preferentially having heat-seal properties (i.e. portions of the multilayer packaging material can be sealed to one another).

In further detail, the multilayer packaging material may comprise at least one layer of fibrous material, such as e.g. paper or cardboard, and at least two layers of heat-seal plastic material, e.g. polyethylene, interposing the layer of fibrous material in between one another. Preferentially, one of these two layers of heat-seal plastic material may define the inner face of packages 2 contacting the pourable product.

Moreover, the multilayer packaging material may also comprise a layer of gas- and light-barrier material, e.g. aluminum foil or ethylene vinyl alcohol (EVOH) film, preferentially being arranged between one of the layers of heat-seal plastic material and the layer of fibrous material.

Preferentially, the packaging material may also comprise a further layer of heat-seal plastic material being interposed between the layer of gas- and light-barrier material and the layer of fibrous material.

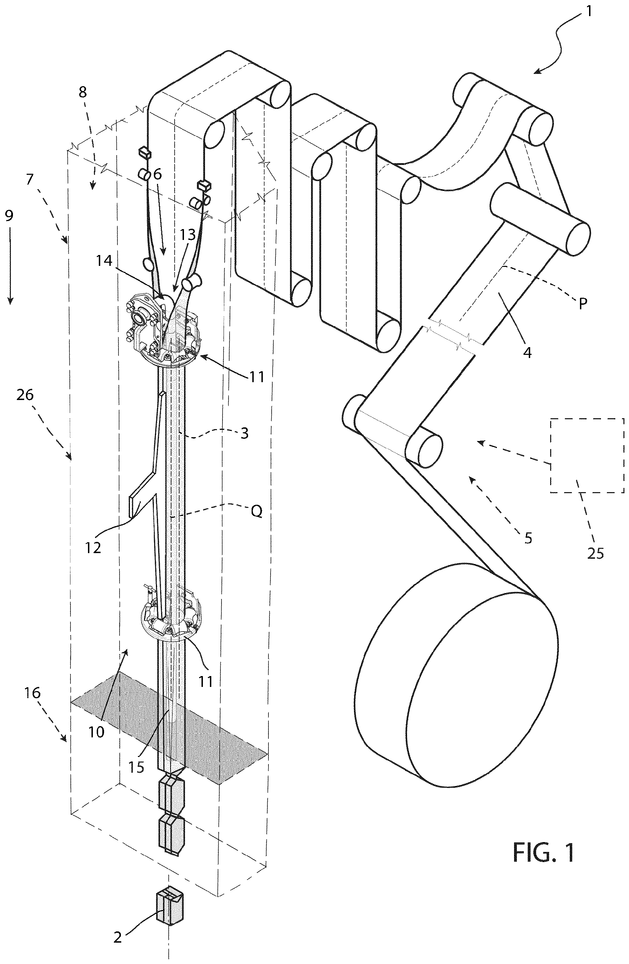

With particular reference to Figure 1, packaging machine 1 may comprise a conveying device 5 configured to advance (in a known manner) web 4 along a web advancement path P, preferentially from a delivery station to a tube forming station 6, at which, in use, web 4 is formed into tube 3. Conveying device 5 may also be configured to advance tube 3 along a tube advancement path Q.

Packaging machine 1 may comprise an isolation chamber 7 having an inner environment 8, in particular an inner sterile environment 11, preferentially containing a sterile gas, more preferentially sterile air, and being separated from an outer environment 9.

Packaging machine 1 may comprise a tube forming and sealing device 10 configured to form tube 3, preferentially to fold tube 3 from web 4, and to longitudinally seal tube 3.

Preferentially, tube forming and sealing device 10 may be arranged within isolation chamber 7, more preferentially inner environment 8, and may be configured to form and longitudinally seal tube 3 within isolation chamber 7, more preferentially inner environment 8.

Preferentially, tube forming and sealing device 10 may be configured to gradually fold web 4 into tube 3, preferentially by overlapping a first lateral edge and a second lateral edge of web 4 with one another for forming a longitudinal seam portion of tube 3. Preferentially, tube forming and sealing device 10 may be configured to longitudinally seal the longitudinal seam portion.

Preferentially, conveying device 5 may be configured to advance tube 3 and any intermediate of tube 3 along tube advancement path Q. In particular, with the wording intermediates of tube 3 any configuration of web 4 is meant prior to obtaining the tube structure and after folding of web 4 by tube forming and sealing device 10 has started. In other words, the intermediates of tube 3 are a result of the gradual folding of web 4 so as to obtain tube 3, preferentially by overlapping with one another the first lateral edge of web 4 and the second lateral edge of web 4.

Preferentially, tube forming and sealing device 10 may comprise a plurality of forming ring assemblies 11, preferentially arranged within inner environment 8 configured to gradually fold in cooperation with one another web 4 into tube 3.

Preferentially, tube forming and sealing device 10 may comprise a sealing head 12 configured to longitudinally seal tube 3, preferentially the longitudinal seam portion.

Preferentially, tube forming and sealing device may also comprise a pressuring assembly configured to exert a mechanical force on tube 3, preferentially on the longitudinal seam portion. E.g., the pressuring assembly may comprise an interaction roller and a counter-interaction roller adapted to exert a mechanical force onto the longitudinal seam portion from opposite sides thereof.

Additionally, packaging machine 1 may comprise a filling device 13 for filling, preferentially continuously filling, tube 3 with the pourable product.

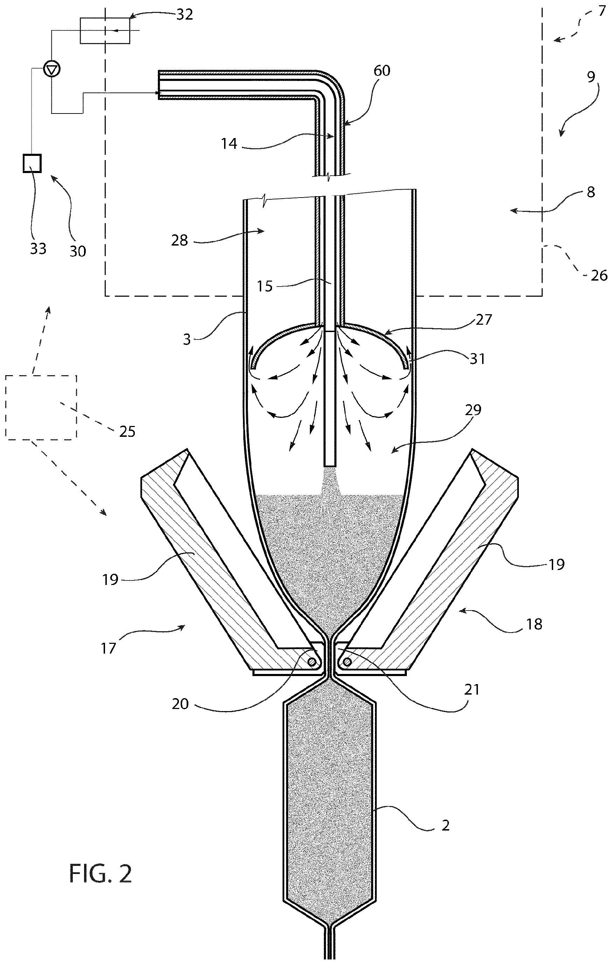

With particular reference to Figures 1 and 2, filling device 13 may comprise a filling pipe 14 being and/or being configured to be put in in fluid connection with a pourable product storage tank, which is adapted to store/provide for the pourable product to be packaged.

Preferentially, filling pipe 14 may be configured to direct, in use, the pourable product into tube 3. Preferentially, filling pipe 14 may be configured to be, in use, at least partially placed within tube 3 for feeding the pourable product into tube 3. Preferentially, filling pipe 14 may include a linear main pipe portion 15 extending within tube 3, more preferentially main pipe portion 15 may extend (substantially) parallel to tube advancement path Q and/or tube 3.

More preferentially, main pipe portion 15 may comprise a lower section having an outlet opening from which, in use, the pourable product is fed, in use, into tube 3.

Packaging machine 1 may also comprise a package forming apparatus 16 configured to manipulate, preferentially to at least partially shape and/or transversally seal and/or transversally cut, tube 3 for obtaining packages 2 from tube 3.

In more detail, package forming unit 16 may be arranged downstream from isolation chamber 7 along tube advancement path Q.

Preferentially, package forming unit 16 may carry isolation chamber 7.

With reference to Figure 2, package forming unit 16 may comprise a plurality of operative assemblies 17 (only one shown) and a plurality of counter-operative assemblies 18 (only one shown) configured to manipulate tube 3 for forming packages 2.

More specifically, each operative assemblies 17 may be configured to cooperate with one respective counter-operative assembly 18 for manipulating preferentially to at least partially shape and/or transversally seal and/or transversally cut, tube 3 for forming packages 2.

Additionally, package forming unit 16 may comprise a conveying unit configured to advance operative assemblies 17 and counter-operative assemblies 18 along respective advancement paths.

Preferentially, in use, each of operative assembly 17 and each counter-operative assembly 18 cyclically advances along the respective advancement path.

Furthermore, each operative assembly 17 and each counter-operative assembly 18 may comprise:
- a half-shell 19 adapted to contact tube 3 and to at least partially define the shape of packages 2; and/or
- one of a sealing element 20 or a counter-sealing element 21, configured to transversally seal tube 3 between adjacent packages 2; and/or
- one of a cutting element or a counter-cutting element for transversally cutting tube 3 between adjacent packages 2.

According to a preferred non-limiting embodiment, package forming unit 16 is of the type described in any of patent documents EP3254980A1, EP3476751A1 in the name of the present Applicant. It is expressly understood that all the functional and structural features of the forming assembly of patent documents EP3254980A1, EP3476751A1 can be applied to package forming unit 16 described herein.

Moreover, packaging machine 1 comprises a control unit 25 configured to control operation of packaging machine 1.

Preferentially, control unit 25 may be configured to control packaging machine 1 into:
- a production configuration in which packaging machine 1 is configured to form packages 2 from tube 3 advancing along tube advancement path Q; and
- a cleaning configuration in which packaging machine 1 is set to be at least partially cleaned (i.e. at least portions of packaging machine 1 are cleaned or all of packaging machine 1 is cleaned).

In more detail, control unit 25 may be configured to at least actuate and interrupt operation of conveying device 5, tube forming and sealing device 10, packaging forming apparatus 16 when setting packaging machine 1 into, respectively, the production configuration and the cleaning configuration.

With particular reference to Figures 1 and 2, isolation chamber 7 may comprise a housing 26, preferentially arranged on package forming apparatus 16, delimiting inner environment 8 (i.e. housing 26 separates inner environment 8 from outer environment 9).

Preferentially, inner environment 8 may comprise (i.e. may contain) the sterile gas, more preferentially the sterile air, at a given pressure. Preferentially, the given pressure may be (slightly) above ambient pressure for reducing the risk of any contaminants entering inner environment 8. E.g., the given pressure may be about 100 Pa to 500 Pa (0,001 bar to 0,005 bar) above ambient pressure.

Preferentially, packaging apparatus 1 may comprise a distribution device for feeding the sterile gas, preferentially the sterile air, into isolation chamber 7, in particular inner environment 8.

According to one or more embodiments of the present invention and with particular reference to Figure 2, packaging machine 1 may also comprise a delimiting element 27 placed, in use, within tube 3 and designed to divide tube 3, in use, into a first space 28 and a second space 29.

Additionally, packaging machine 1 may also comprise a pressurizing device 30 configured to direct, preferentially to continuously direct, in use, a flow of sterile gas, preferentially a flow of sterile air, into tube 3, preferentially into second space 29, preferentially for obtaining a gas pressure within second space 29 being higher than the gas pressure within first space 28.

In more detail, first space 28 may be delimited by tube 3, preferentially the walls of tube 3, and delimiting element 27. Furthermore, first space 28 may open up into inner environment 8. More preferentially, delimiting element 27 may delimit first space 28 at a downstream portion, in particular a bottom portion, of first space 28 itself.

In more detail, second space 29 may be delimited, in use, by tube 3, in particular the walls of tube 3, delimiting element 27 and a transversal seal portion provided at an axial end of tube 3.

In further detail, first space 28 may be arranged upstream of second space 29 along tube advancement path Q. Preferentially, first space 28 may be arranged upstream of delimiting element 27 along tube advancement path Q. In the specific example shown, second space 29 may be placed below first space 28.

Preferentially, second space 29 may define a high-pressure zone within tube 3 and first space 28 defines a low-pressure zone within tube 3.

In the context of the present application, high-pressure zone (i.e. second space 29) is to be understood such that the internal pressure lies in a range of about 5kPa to 40kPa (0,05 bar to 0,4 bar), in particular of about 10kPa to 30 kPa (0,10 bar to 0,30 bar) above ambient pressure (i.e. the pressure within second space 29 lies in a range of about 5kPa to 40kPa (0,05 bar to 0,4 bar), in particular of about 10kPa to 30 kPa (0,10 bar to 0,30 bar) above ambient pressure). In other words, second space 29 is overpressurized.

Low-pressure zone (i.e. first space 28) is to be understood such that the pressure is slightly higher than the ambient pressure. In particular, slightly higher than the ambient pressure means that the pressure lies in a range between 100 Pa to 500 Pa (0,001 bar to 0,005 bar) above ambient pressure.

In further detail, first space 28 may be in (direct) fluidic connection with inner environment 8. Thus, sterile gas present in first space 28 can flow to inner environment 8.

Preferentially, tube 3 (and its intermediates) lie at least partially within isolation chamber 7 (in particular, within inner environment 8).

Preferentially, the pressure inside first space 28 may (substantially) equal the given pressure present in isolation chamber 7, preferentially in inner environment 8. Preferentially, the pressure inside first space 28 may range between 100 Pa to 500 Pa (0,001 bar to 0,005 bar) above ambient pressure.

Filling device 13, preferentially filling pipe 14, may be configured to direct the pourable product into second space 29. Thus, in use, second space 29 may contain the pourable product and the pressurized sterile gas. The pressurized sterile gas may provide for the required hydrostatic force needed for a correct forming of packages 2.

Advantageously, delimiting element 27 may be designed to provide, in use, for at least one fluidic channel 31, preferentially having an annular shape, for fluidically connecting second space 29 with first space 28 allowing for, in use, a leakage flow of sterile gas from second space 29 into first space 28. Preferentially, in use, the sterile gas leaks from second space 29 (the high-pressure zone) to first space 28 (the low-pressure zone) through fluidic channel 31. By providing for fluidic channel 30 it is possible to control the gas pressure within second space 29 with an increased accuracy. Preferentially delimiting element 27 may be designed such that, in use, fluidic channel 31 may be provided by a gap between the inner surface of tube 3 and delimiting element 27, preferentially a peripheral portion of delimiting element 27.

Preferentially, pressurizing device 30 may be configured to provide for a variable flow of sterile gas of about 10 to 200 Nm3/h, in particular of 20 to 180 Nm3/h, even more particular of about 25 to 150 Nm3/h.

Preferentially, pressurizing device 30 may be configured to vary the flow of sterile gas in dependence of the sterile gas flowing from second space 29 to first space 28.

Preferentially, pressurizing device 30 may be configured to control the gas pressure within second space 29 to range between 5 kPa to 40 kPa (0,05 bar to 0,40 bar), in particular between 10 kPa to 30 kPa (0,1 bar to 0,3 bar), above ambient pressure.

Preferentially, pressurizing device 30 may be configured to withdraw sterile gas from inner environment 8, more preferentially to pressurize (to compress) the sterile gas, and to direct sterile gas, preferentially the pressurized (compressed) sterile gas into second space 29.

According to some preferred embodiments, packaging machine 1 comprises a control valve 32 configured to selectively control a fluidic connection between inner environment 8 and pressurizing device 30.

Advantageously, pressurizing device 30 and control valve 32 may be configured and/or arranged such to allow for a closed sterile gas circuit from inner environment 8 into second space 29 and back into inner environment 8.

Preferentially, pressurizing device 30 may comprise an aspiration device 33, such as a compressor, configured to generate aspiration forces so as to withdraw the sterile gas from inner environment 8, and preferentially to pressurize (to compress) the sterile gas and to direct the pressurized sterile gas into second space 29. E.g., aspiration device 33 may be a rotary machine, more preferentially a compressor.

Preferentially, aspiration device 33 may be configured to generate the aspiration forces with packaging machine 1 being set into the production configuration.

Packaging machine 1 may comprise a tubing 34 (fluidically) connecting control valve 32 and aspiration device 33 with one another.

According to some preferred non-limiting embodiments, control valve 32 may be connected to isolation chamber 7.

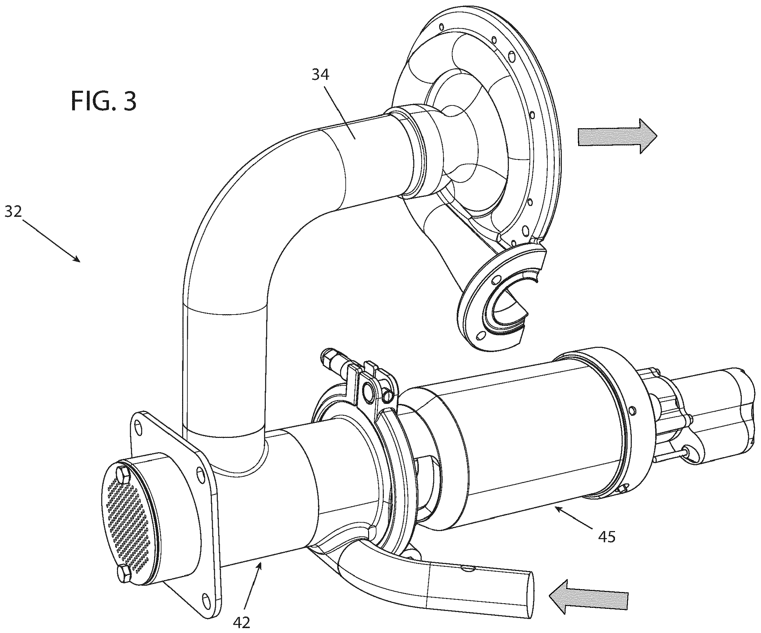

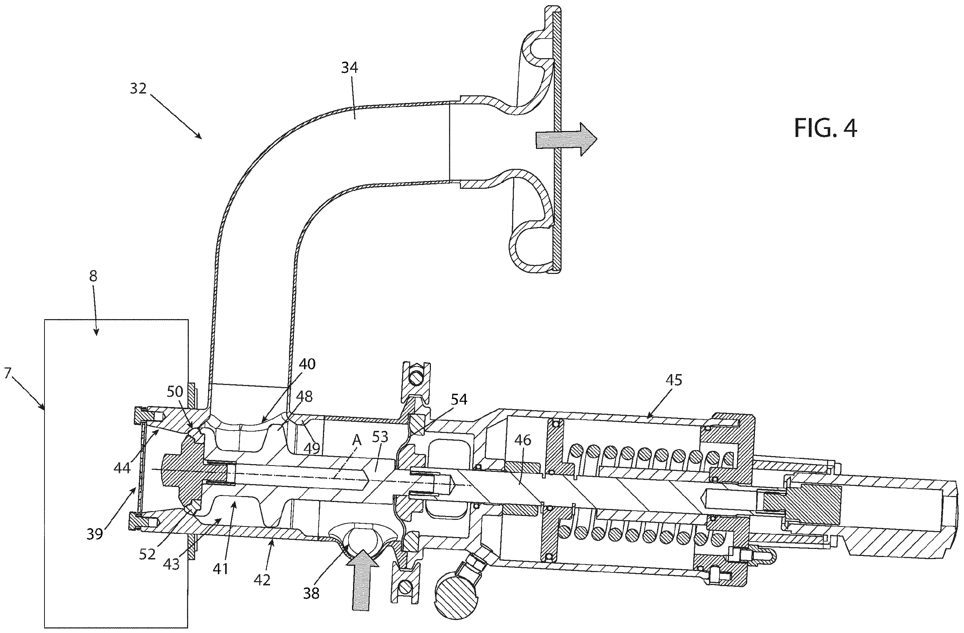

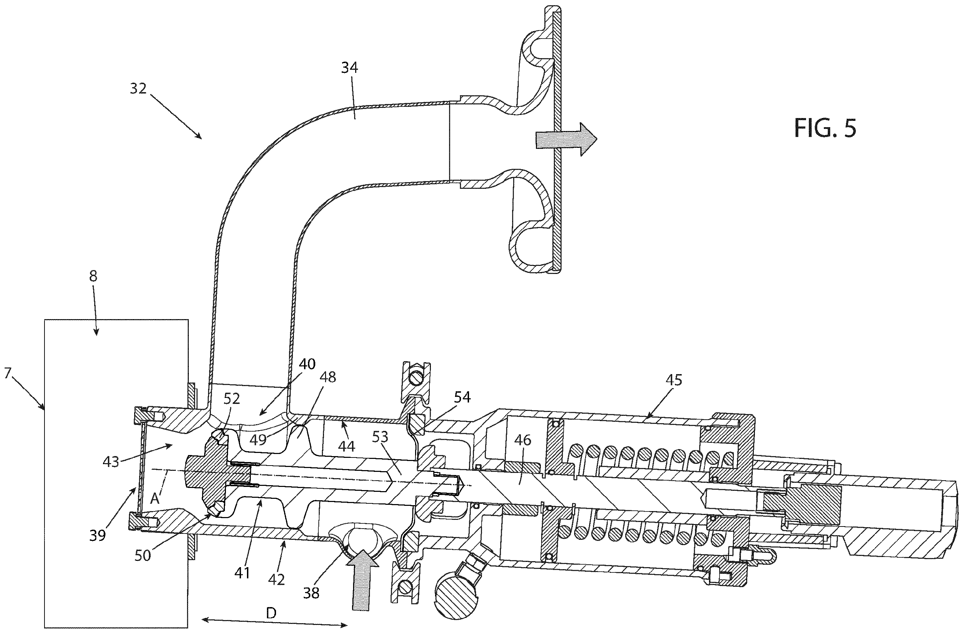

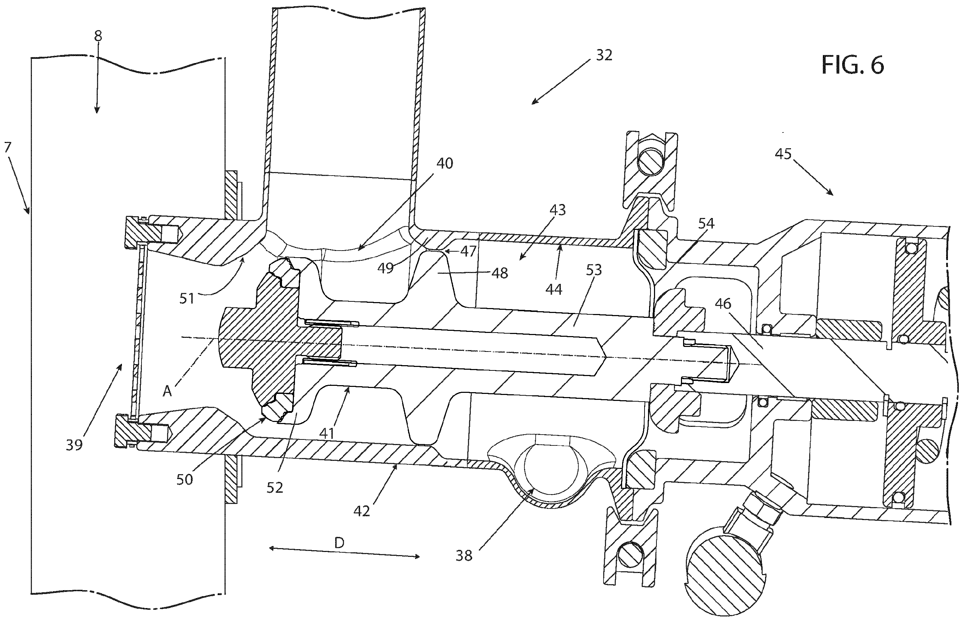

Preferentially, control valve 32 may be welded to isolation chamber 7. In this way, it is possible to avoid fluidic connections between inner environment 8 and outer environment 9 at the connection station between isolation chamber 7 and control valve 32. Additionally, one avoids the use of gaskets at the connection station between isolation chamber 7 and control valve 32.With particular reference to Figures 3 to 6, control valve 32 comprises:
- an inlet opening 38 configured to receive a fluid, preferentially a sterile gas, more preferentially sterile air;
- a first aperture 39 being controllable and/or being in fluidic connection with inner environment 8;
- a second aperture 40 being controllable and/or being in fluidic connection with pressurizing device 30.

Control valve 32 comprises a shutter 41 moveable between an open position and a closed position in which shutter 41 is configured to selectively open and close first aperture 39, respectively.

Preferentially, shutter 41 may be configured to interrupt a fluidic connection between first aperture 39 and second aperture 40 when being in the closed position. In other words, with shutter 40 being in the closed position a fluidic connection between inner environment 8 and pressurizing device 30 is interrupted.

In further detail, control valve 32 may comprise a valve body 42 having an inner space 43. Preferentially, valve body 42 may comprise an inner surface 44 delimiting inner space 43.

Preferentially, shutter 41 may be moveably arranged within inner space 43.

According to some preferred non-limiting embodiments, shutter 41 may be moveable, preferentially within inner space 43, along a movement direction D.

Preferentially, shutter 41 may extend along a longitudinal axis A, preferentially being parallel to movement direction D.

According to some preferred non-limiting embodiments, valve body 42 may carry inlet opening 38, first aperture 39 and second aperture 40.

Preferentially, first aperture 39 (i.e. a central axis thereof) may be parallel to movement direction D and/or to longitudinal axis A. Preferentially, first aperture 39 may be coaxial to longitudinal axis A.

In addition or alternatively, inlet opening 38 may comprise and/or define an inlet opening central axis being transversal to movement direction D and/or longitudinal axis A.

In addition or alternatively, second aperture 40 may comprise and/or define a second central axis being transversal to movement direction D and/or longitudinal axis A.

According to some possible preferred embodiments, inlet opening 38 and second aperture 40 are arranged on opposite sides of valve body 42.

According to some possible preferred embodiments, the inlet opening central axis of inlet opening 38 may be offset with respect to a second central axis of second aperture 40, along movement direction D and/or longitudinal axis A. In particular, the inlet opening central axis of inlet opening 38 is positioned between first aperture 38 and the second central axis of second aperture 40.

According to some preferred non-limiting embodiments, control valve 32 may be positioned such that first aperture 39 is placed within inner environment 8 and/or a portion of valve body 42 carrying first aperture 39 may be arranged within inner environment 8.

Possibly, control valve 32 may be mounted to isolation chamber 7, and preferentially partially extends into inner environment 8.

According to some preferred non-limiting embodiments, control valve 32 may also comprise an actuator 45 coupled to shutter 41 and being configured to move shutter 41 between the closed position and the open position.

Preferentially, actuator 45 may be mounted to valve body 42.

More specifically, actuator 45 may comprise a linearly moveable piston 46 connected to shutter 42.

According to some preferred non-limiting embodiments, control unit 25 may be configured to control shutter 41 into the open position and the closed position when setting packaging machine 1 into, respectively, the production configuration and the cleaning configuration.

During the operation of packages 2, i.e. when packaging machine 1 is controlled into the operative position, the fluidic connection between first aperture 39 and second aperture 40 is open and allows therefore pressurizing device 30 to withdraw sterile gas from inner environment 8. During a cleaning and/or sterilization of packaging machine 1 shutter 41 closes the fluidic connection between first aperture 39 and second aperture 40 and no fluids can enter from isolation chamber 8 into inner space 43 or vice-versa.

According to some advantageous non-limiting embodiments, inner surface 44 and/or shutter 41 are shaped such that a gap 47 is formed (between inner surface 44 and shutter 41) to define a flow restriction between inner surface 44 and shutter 41 with shutter 41 being in the open position.

Preferentially, the flow restriction guarantees a fluidic connection between inlet opening 38 and second aperture 40.

More preferentially, shutter 41 may be formed such that there is always a fluidic connection between inlet opening 38 and second aperture 40 independently of an axial position of shutter 41. In other words, independently on whether shutter 41 may be in the closed position and the open position, a gap 47 is formed. However, while in the open position, gap 47 defines a flow restriction, this is not the case or at least it is not necessary in the closed position.

In further detail, shutter 41 may comprise an annular thickening 48 defining with inner surface 44 the flow restriction, in particular with shutter 41 being in the open position.

Moreover, inner surface 44 may comprise an annular protrusion 49 radially extending towards a center of inner space 43 and defining together with annular thickening 48 the flow restriction, in particular with shutter 41 being in the open position.

According to some preferred non-limiting embodiments, annular thickening 48 may be aligned with and/or face annular protrusion 49 with shutter 41 being in the open position. In this way, one effectively obtains the flow restriction.

Moreover, with shutter 41 being in the open position, annular thickening 48 may be misaligned with respect to protrusion 49 and/or may be axially displaced from protrusion 49.

According to some non-limiting embodiments, shutter 41 may comprise an abutment surface 49 configured to abut against an engagement surface 50 of inner surface 44 with shutter being controlled in the closed position. In particular, abutment between abutment surface 49 and engagement surface 50 guarantees that the fluidic connection between first aperture 39 and second aperture 40 may be closed.

In more detail, shutter 41 may comprise a main annular thickening 51 having abutment surface 49. E.g. main annular thickening 51 may have a sealing member comprising abutment surface 49.

Preferentially, abutment surface 49 and engagement surface 50 may each have an annular shape.

According to some preferred non-limiting embodiments, main annular thickening 51 and annular thickening 48 are axially displaced from one another along longitudinal axis A. Preferentially, main annular thickening 51 may be axially closer to first aperture 39 than annular thickening 48.

With particular reference to Figures 3 to 6, shutter 41 may comprise a base rod 53 extending along longitudinal axis A and main annular thickening 52 and/or annular thickening 48 may radially protrude from base rod 53.

It should be noted that the term "annular thickening" may mean that the respective portion presents a larger radial extension than base rod 53.

According to some possible embodiments, valve body 52 may comprise a (flexible) membrane 54 and actuator 45 may be connected to valve body 52 in correspondence to membrane 54.

According to some preferred non-limiting embodiments, packaging machine may further comprise a sterile gas system configured to introduce a sterile gas into control valve 32 and through inlet opening 38. Preferentially with packaging machine 1 being controlled into the production configuration. E.g. the sterile gas system may introduce the sterile gas into a zone of inner space 43 delimited by annular thickening 48 and valve body 42, preferentially membrane 54.

In use, pressuring device 30, preferentially aspiration device 33 draws the sterile gas from inner environment 8 with shutter 41 being in the open position. The sterile gas system directs the sterile gas into inner space 43 and thanks to gap 47 defining a restriction flow an overpressure is created in the zone of inner space 43 being delimiting by annular thickening 48 and valve body 42, preferentially membrane 54.

Thanks to the overpressure generated between annular thickening 48 and membrane 54 one guarantees that no contamination may enter into inner space 43. Moreover, the overpressure guarantees that membrane 54 may not get depressed.

According to some further embodiments, packaging machine 1 may also comprise a cleaning agent injection device configured to inject a cleaning agent into control valve 32 and through inlet opening 38, preferentially with packaging machine 1 being controlled into the cleaning configuration.

According to some preferred non-limiting embodiments, at least a portion of inner surface 44 may be formed such to guarantee and/or facilitate that any residues (e.g. droplets) of the cleaning agent may drain towards inlet opening 38. E.g. the portion of inner surface 44 may be inclined towards inlet opening 38.

Additionally or alternatively, a section of inner surface 44 in the vicinity of first aperture 39 may be formed such that any residues of the cleaning agent may drain into inner environment 8. E.g. the section of inner surface 44 may be inclined towards first aperture 39.

With particular reference to Figure 2, pressurizing device 30 may comprise a gas feeding pipe 60, preferentially fluidically connected to aspiration device 33 and second space 29, and being configured to receive the sterile gas, preferentially withdrawn from inner environment 8, from aspiration device 33 and to introduce the sterile gas into second space 29.

Preferentially, delimiting element 27 may be coupled to and/or may be carried by gas feeding pipe 60.

According to some preferred non-limiting embodiments, at least a portion of filling pipe 14 may extend within gas feeding pipe 60. According to such an embodiment, a flow channel for the sterile gas to be fed into second space 29 may be at least partially delimited by filling pipe 14 and gas feeding pipe 60.

According to a preferred non-limiting embodiment, packaging machine 1 further comprises a sterilization apparatus for sterilizing at least a portion of web 4, preferentially at least a first face, even more preferentially the first face and a second face, preferentially at a sterilization station. Preferentially, the sterilization station is arranged upstream of tube forming station 6 along web advancement path P. Preferentially, the sterilization apparatus may be in fluid connection with the isolation chamber 7.

According to one or more embodiments, packaging machine 1 may be configured to receive the pourable product from an upstream equipment and/or to transfer packages 2 to a downstream equipment.

According to one aspect of the present disclosure, a packaging line may be provided, the packaging line comprising packaging machine 1 and at least one of the upstream equipment and the downstream equipment.

The upstream equipment may be configured to provide the pourable product to be filled. The upstream equipment may include one or more of the following equipment: tank, separator, steam injector, heat exchanger, homogenizer, mixer, filtration system, deaerator.

The downstream equipment may be configured to receive packages 2 and to operate further actions on packages 2.

The downstream equipment may include one or more chosen from the group of a cardboard packer configured to group and pack a plurality of formed and sealed packages 2 into a carton, an accumulator configured to store a plurality of packages 2, a cap applicator configured to apply a cap or lid onto each package 2.

The present disclosure also provides a method for forming a plurality of packages 2 filled with the pourable product. Preferably, the method is carried out by packaging machine 1.

The method includes a step of controlling, during which packaging machine 1 is set into the production configuration or the cleaning configuration.

When packaging machine 1 is controlled into the production configuration and the cleaning configuration, shutter 41 is positioned, respectively, in the open position and the closed position.

With packaging machine 1 being controlled in the production configuration, the method includes:
- a step of advancing web 4 along a web advancement path P, by means of conveying device 5;
- a step of forming tube 3 from the advancing web 4, through tube forming and sealing device 10;
- a step of longitudinally sealing tube 3 through tube forming and sealing device 10;
- a step of advancing the tube 3 along tube advancement path Q;
- a step of filling tube 3 with a pourable product, through filling device 13; and
- a step of forming and transversally sealing (and cutting) packages 2 from the advancing tube 3, through package forming apparatus 16.

The method also includes a step of directing a flow of sterile gas into tube 3, preferentially second space 29, through pressurizing device 30. In particular, pressuring device 30 withdraws the sterile gas from inner environment 8 and through first aperture 39 and second aperture 40 and with shutter 41 being in the open position.

The method also includes the step of introducing the sterile gas through inlet opening 38 into inner space 43 by means of the sterile gas feeding system.

With packaging machine 1 being controlled into the cleaning configuration shutter 41 is set in the closed position and the cleaning agent is introduced into inner space 43 through inlet opening 38. Additionally, then the cleaning agent is further directed towards and through pressurizing device 30.

The advantages of packaging machine 1 according to the present invention will be clear from the foregoing description.

In particular, control valve 32 allows to control the ideal conditions for production and cleaning purposes.

Additionally, control valve 32 provides for overpressure where needed so as to avoid any undesired contaminations.

Additionally, during cleaning no cleaning agent leaks from control valve 32 into inner environment 8.

Clearly, changes may be made to packaging machine 1 as described herein without, however, departing from the scope of protection as defined in the accompanying claims.

## Claims

1. A packaging machine (1) for forming packages (2) filled with a pourable product, comprising:
- a conveying device (5) configured to advance a web (4) of packaging material along a web advancement path (P);
- an isolation chamber (7) separating an inner environment (8) containing, in use, a sterile gas from an outer environment (9);
- a tube forming and sealing device (10) being at least partially arranged within the isolation chamber (7) and being configured to form and longitudinally seal a tube (3) from the, in use, advancing web (4) of packaging material;
- a pressurizing device (30) configured to direct, in use, a flow of gas into the tube (3); and
- a control valve (32) configured to selectively control a fluidic connection between the inner environment (7) and the pressurizing device (30);
wherein the control valve (32) comprises:
- an inlet opening (38) configured to receive a fluid;
- a first aperture (39) being and/or being controllable in fluidic connection with the inner environment (7);
- a second aperture (40) being controllable in fluidic connection with the pressurizing device (32); and
- a shutter (41) moveable between an open position and a closed position in which the shutter (41) is configured to selectively open and close the first aperture (39), respectively
**characterized in that** the control valve (32) comprises a valve body (42) having an inner surface (44) delimiting an inner space (43);
wherein the shutter (41) is moveably arranged within the inner space (43);
wherein the shutter (41) comprises an abutment surface (50) configured to abut against an engagement surface (51) of the inner surface (44) with the shutter (41) being controlled in the closed position.

2. Packaging machine (1) according to claim 1, wherein the shutter (41) interrupts a fluidic connection between the first aperture (39) and the second aperture (40) when being in the closed position.

3. Packaging machine (1) according to claim 1 or 2, wherein the control valve (32) comprises a valve body (42) having an inner surface (44) delimiting an inner space (43);
wherein the shutter (41) is moveably arranged within the inner space (43);
wherein the inner surface (43) and/or the shutter (41) are shaped such that a gap (47) between the inner surface (44) and the shutter (41) is formed to define a flow restriction with the shutter (41) being in the open position;
wherein the flow restriction guarantees a fluidic connection between the inlet opening (38) and the second aperture (40).

4. Packaging machine (1) according to claim 3, wherein the shutter (41) comprises an annular thickening (48) configured to define with the inner surface (43) the flow restriction.

5. Packaging machine (1) according to claim 4, wherein the inner surface (43) comprises an annular protrusion (49) radially extending towards a center of the inner space (43) and defining together with the annular thickening (48) the flow restriction, when the shutter (41) is controlled in the open position.

6. Packaging machine (1) according to claim 5, wherein the annular thickening (48) and the annular protrusion (49) are aligned with one another and/or face one another, with shutter (41) being in the open position.

7. Packaging machine (1) according to any one of the preceding claims, wherein the shutter (41) comprises a main annular thickening (52) having the abutment surface (50).

8. Packaging machine (1) according to any one of the preceding claims, wherein the first aperture (39) is placed within the inner environment (8).

9. Packaging machine (1) according to any one of the preceding claims, wherein the shutter (41) is moveable into a movement direction (D);
wherein the first aperture (39) defines a first central axis parallel to the movement direction (D); and/or
wherein the inlet opening (38) defines a inlet opening central axis being transversal to the movement direction (D); and/or
wherein the second aperture (40) defines a second central axis being transversal to the movement direction (D) .

10. Packaging machine (1) according to claim 9, wherein the shutter (41) extends along a longitudinal axis (A), being parallel to the movement direction (D).

11. Packaging machine (1) according to any one of the preceding claims, further comprising a control unit (25) configured to control operation of the packaging machine (1) ;
wherein the control unit (25) is configured to set the packaging machine (1) into:
- a production configuration in which the packaging machine (1) is configured to form the packages (2) from the advancing tube (3); and
- a cleaning configuration in which the packaging machine (1) is configured to be cleaned;
wherein the control unit (25) is configured to control the shutter (41) of the control valve (32) into the open position and the closed position when setting the packaging machine (1) into, respectively, the production configuration and the cleaning configuration.

12. Packaging machine (1) according to claim 11, wherein the pressurizing device (30) comprises an aspiration device (33) configured to aspire gas from the inner environment (7) through the first aperture (39) and the second aperture (40) while the packaging machine (1) is set into the production configuration.

13. Packaging machine (1) according to any one of the preceding claims, further comprising a sterile gas system configured to introduce a sterile gas into the control valve (32) and through the inlet opening (38).

14. Packaging machine (1) according to any one of the preceding claims, further comprising a delimiting element (27) arranged, in use, within the tube (3) and designed to divide the tube (3) in a first space (28) being in fluidic connection with the inner environment (8) and a second space (29) being arranged downstream of the first space (28) along the tube advancement path (Q);
wherein the pressurizing device (30) is configured to direct, in use, the flow of gas into the second space (29).

15. Packaging machine (1) according to any one of the preceding claims, further comprising:
- a filling device (13) configured to fill the tube (3) with the pourable product; and
- a package forming unit (16) configured to form and transversally seal the packages (2) from the, in use, advancing tube (3).
